# EUROPÄISCHE PATENTSCHRIFT

(11) **EP 2 087 706 B1**
(45) Veröffentlichungstag und Bekanntmachung des Hinweises auf die Patenterteilung: **25.02.2015**
(21) Anmeldenummer: 07821794.0
(22) Anmeldetag: 24.10.2007
(51) Int. Cl.: H04L 29/08

(54) **VERFAHREN ZUR VERARBEITUNG VON DIENSTEN IN EINEM DATENNETZ**
METHOD FOR PROCESSING SERVICES IN A DATA NETWORK
PROCÉDÉ POUR LE TRAITEMENT DE SERVICES DANS UN RÉSEAU DE DONNÉES

(30) Priorität: 31.10.2006 DE 102006051440
(43) Veröffentlichungstag der Anmeldung: 12.08.2009
(73) Patentinhaber: Siemens Aktiengesellschaft, 80333 München (DE)
(72) Erfinder: AUGUSTIN, Stefan, 81379 München (DE); LINDNER, Bernd, 85622 Feldkirchen (DE)
(86) Internationale Anmeldenummer: PCT/EP2007/061431
(87) Internationale Veröffentlichungsnummer: WO 2008/052924

(56) Entgegenhaltungen:
- EP-A- 1 241 573
- WO-A-2005/082072
- US-A1- 2003 023 953
- US-A1- 2005 114 435

## Beschreibung

Die Erfindung betrifft ein Verfahren zur Verarbeitung von Diensten in einem Datennetz, wobei ein oder mehrere Dienste einem Benutzer auf mehreren, zumindest teilweise unterschiedlichen Benutzerschnittstellen bereitgestellt werden, sowie ein entsprechendes Datennetz und entsprechende Netzrechner.

Heutzutage werden bei der Kommunikation über Datennetze und insbesondere über das Internet neben den klassischen PCs (PC = Personal Computer) zunehmend auch andere Geräte, wie z.B. Handys oder PDAs (PDA = Personal Digital Assistant) eingesetzt. Ebenso kommen bei der Datenkommunikation auch immer mehr Geräte zum Einsatz, welche früher nicht zu einer internet-basierten Kommunikation vorgesehen waren, wie z.B. Fernseher, Haushaltsgeräte, Navigationssysteme in Fahrzeugen und dergleichen. Es besteht somit ein Bedürfnis, dass die Dienste, die über ein Datennetz einem Benutzer angeboten werden, über mehrere unterschiedliche Geräte bzw. Benutzerschnittstellen parallel genutzt werden können. Hier und im Folgenden ist unter Dienst eine beliebige Anwendung oder ein beliebiger Prozess in dem Datennetz zu verstehen, der über eine Benutzerschnittstelle mit einem Nutzer interagiert.

Aus dem Stand der Technik sind Lösungen bekannt, wie verschiedene Dienste in einem Datennetz simultan einem Benutzer bereitgestellt werden können. Insbesondere ist die Bereitstellung von Diensten über ein Portal bekannt, welches unterschiedliche Anwendungen, Prozesse und Dienste in einer einheitlichen Plattform integriert. Die Portal-Technik wird bisher dazu eingesetzt, um mehrere Anwendungen in einer Benutzeroberfläche auf einem einzelnen Gerät zu integrieren. Es gibt bisher keine Vorschläge, ein Portal auf mehrere Geräte bzw. Benutzerschnittstellen zu verteilen.

Ferner ist die Technik des so genannten Multi-Channel-Publishing bekannt, welche es ermöglicht, Inhalte aus einem Datennetz medien-neutral (formatfrei) aufzubereiten und für unterschiedliche Kanäle nutzbar zu machen, beispielsweise für einen Web-Browser unter Verwendung von HTML (HTML = Hypertext Markup Language), für ein Mobiltelefon unter Verwendung von WML (WML = Wireless Markup Language) oder für einen Drucker unter Verwendung von PDF (PDF = Portable Document Format). Durch Verwendung von so genannten Style-Sheets und/oder Transformationen wird der Inhalt für die Präsentation in das kanalspezifische Format und Layout gebracht. Mit dem Multi-Channel-Publishing ist es möglich, einen Dienst auf unterschiedlichen Geräten anzubieten. Jedes dieser Geräte ist jedoch voneinander unabhängig und es gibt keine Integration unterschiedlicher Geräte und keine Interaktion nach Art eines Portals zwischen den Benutzerschnittstellen auf den unterschiedlichen Geräten.

Aus dem Stand der Technik sind ferner multimodale Systeme bekannt, welche die Eigenschaft haben, verschiedene Sinneskanäle eines Nutzers einzubeziehen, insbesondere visuelle, auditive und haptische Sinneskanäle. Beispielsweise kann die Eingabe in einem Formular einer Benutzerschnittstelle alternativ über Sprache oder über ein grafisches Display und eine Tastatur, und gegebenenfalls auch über Gestik-Erkennung, erfolgen.

Die Druckschrift US 2003/023953 A1 offenbart ein multimodales System, bei dem ein Benutzer mit der gleichen Information über eine Vielzahl von Kanälen mittels verschiedener Geräte interagieren kann und dabei die Information zwischen den Geräten synchronisiert wird.

Die Druckschrift US 2005/114435 A1 offenbart ein System zur Erzeugung einer Benutzerschnittstelle zur Darstellung über ein Netzwerk auf einem Gerät unter Verwendung einer Rohdatei und von Web-Servern.

In der Druckschrift EP 1 241 573 A2 wird die Übergabe von kontextsensitiven Informationen von einer ersten Applikation zu einer zweiten Applikation beschrieben.

Das Dokument WO 2005/082072 A2 beschreibt den automatischen Test des Workflows eines Web-Service, wobei durch den Web-Service durchgeführte Operationen durch eine WSDL-Datei und der Workflow durch eine BPEL-Datei beschrieben wird (WSDL = Web Service Description Language; BPEL = Business Process Execution Language).

Aufgabe der Erfindung ist es, ein Verfahren zur Verarbeitung von Diensten in einem Datennetz zu schaffen, bei dem die Dienste nach Art eines Portals auf zumindest teilweise unterschiedlichen Benutzerschnittstellen angeboten und untereinander synchronisiert werden.

Diese Aufgabe wird durch die unabhängigen Patentansprüche 1, 18 und 20 gelöst. Weiterbildungen der Erfindung sind in den abhängigen Ansprüchen definiert.

In dem erfindungsgemäßen Verfahren werden mehrere Dienste einem Benutzer auf mehreren, zumindest teilweise unterschiedlichen Benutzerschnittstellen bereitgestellt. Die Benutzerschnittstellen können sich hierbei auf beliebige Art und Weise voneinander unterscheiden. Insbesondere ist ein Unterscheidungskriterium, dass die Benutzerschnittstellen über unterschiedliche Interaktionskanäle mit dem Benutzer wechselwirken, z.B. über visuelle und/oder auditive und/oder haptische Interaktionskanäle. Ein weiteres Unterscheidungskriterium kann darin liegen, dass die Benutzerschnittstellen auf mehreren unterschiedlichen Geräten bereitgestellt werden. Die Geräte können hierbei beispielsweise ein Netzrechner, insbesondere ein PC und/oder ein Mobiltelefon und/oder ein PDA und/oder ein Fernseher und/oder ein VoIP (Voice over Internet Protocol)-Telefon oder auch jedes beliebige andere Gerät sein.

In dem erfindungsgemäßen Verfahren werden die Dienste von einer Verwaltungseinheit im Datennetz verwaltet und verarbeitet, wobei durch die Verwaltungseinheit bei einer Zustandsänderung eines auf einer Benutzerschnittstelle bereitgestellten Dienstes die sich daraus ergebende Zustandsänderung des gleichen Dienstes auf einer oder mehreren anderen Benutzerschnittstellen und eines oder mehrerer anderer Dienste auf einer oder mehrerer anderer Benutzerschnittstellen und optional auch auf der gleichen Benutzerschnittstelle ausgelöst wird. Die Verwaltungseinheit stellt somit eine zentrale Synchronisationseinheit in der Form eines Servers dar, welche die mehreren unterschiedlichen Benutzerschnittstellen miteinander synchronisiert und ihre Inhalte entsprechend der Zustandsänderung und der damit verbundenen Zustandsänderung von anderen Diensten bzw. anderen Benutzerschnittstellen aktualisiert.

Damit die Verwaltungseinheit die Informationen der Dienste unabhängig von der Benutzerschnittstelle verwalten und verarbeiten kann, werden zwischen den Benutzerschnittstellen und der Verwaltungseinheit Daten übertragen, welche in wenigstens einer Adaptionseinheit derart adaptiert werden, dass die Daten zwischen der wenigstens einen Adaptionseinheit und der Verwaltungseinheit in einem von den Benutzerschnittstellen unabhängigen Format übertragen werden. Dies bedeutet, dass ein einheitliches und Benutzerschnittstellen übergreifendes Format zur Datenübertragung zwischen der Adaptionseinheit und der Verwaltungseinheit eingesetzt wird. Dabei werden die Daten zwischen einer jeweiligen Benutzerschnittstelle und der Adaptionseinheit in einem von der jeweiligen Benutzerschnittstelle verarbeitbaren Format übertragen, welches insbesondere ein für die jeweilige Benutzerschnittstelle spezifisches Format sein kann.

Der Erfindung liegt somit die Idee zugrunde, die Vorteile eines Portals und des Multi-Channel-Publishing, gegebenenfalls in Kombination mit multimodalen Systemen, über Gerätegrenzen bzw. über unterschiedliche Benutzerschnittstellen hinweg nutzbar zu machen. Die einzelnen unterschiedlichen Benutzerschnittstellen werden über eine zentrale Portal-Komponente in der Form einer Verwaltungseinheit integriert. Die Darstellung der Portal-Oberfläche ist somit auf mehrere unterschiedliche Benutzerschnittstellen bzw. Geräte verteilt. Auf einem Gerät können dabei eine oder mehrere Dienste präsentiert werden.

Die Benutzerschnittstellen sind in dem erfindungsgemäßen Verfahren vorzugsweise als so genannte Benutzeragenten (englisch: User Agents), insbesondere in der Form eines Text-Browsers und/oder eines Sprach-Browsers, ausgestaltet. Benutzeragenten sind hinlänglich aus dem Stand der Technik bekannt und stellen Client-Programme dar, mit denen ein Netzwerkdienst genutzt werden kann.

In einer weiteren Ausgestaltung des erfindungsgemäßen Verfahrens erfolgt für wenigstens einen Teil der Benutzerschnittstellen die Adaption der Daten für jede Benutzerschnittstelle durch eine eigene Adaptionseinheit, welche in dem Gerät integriert ist, auf dem die jeweilige Benutzerschnittstelle bereitgestellt wird. Es ist jedoch auch möglich, dass für wenigstens einen Teil der Benutzerschnittstellen die Adaption der Daten durch eine gemeinsame, allen Benutzerschnittstellen des wenigstens einen Teils zugeordnete Adaptionseinheit im Datennetz erfolgt. Es kann somit je nach Anwendungsfall sowohl eine dezentrale als auch zentrale Adaption der Daten zur Aufbereitung für die Benutzerschnittstelle bzw. der Verwaltungseinheit durchgeführt werden.

Die im erfindungsgemäßen Verfahren verwendeten Benutzerschnittstellen können beliebig ausgestaltet sein. Insbesondere können sie jeweils eine Mehrzahl von Interaktionsfenstern bzw. Interaktionsbereiche umfassen, z.B. ein Eingabeformular und/oder ein Navigationsfenster und/oder ein Aktionsauswahlfenster und/oder ein Informationsfenster. Durch das Eingabeformular wird dem Benutzer die Eingabe von Informationen, beispielsweise von Suchbegriffen, ermöglicht. Dies kann über beliebige Kanäle, insbesondere durch Text- und/oder Spracheingabe erfolgen. Ein Navigationsfenster zeigt an, wie die Inhalte des Dienstes strukturiert sind und auf welche Teilinhalte zugegriffen werden kann. In einem Aktionsauswahlfenster wird angegeben, welche Aktionen durch den Benutzer der Benutzerschnittstelle durchgeführt werden können. Das Informationsfenster gibt entsprechende, durch den oder die Dienste bereitgestellte Informationen aus.

In einer weiteren Ausgestaltung der Erfindung sind zumindest ein Teil der Benutzerschnittstellen kontextabhängige Benutzerschnittstellen, welche nach vorbestimmten Kontextregeln einem Benutzer Informationen bereitstellen und/oder Eingaben durch den Benutzer ermöglichen. Auf diese Weise wird die Darstellung der Benutzerschnittstellen an die von dem Benutzer getätigten Aktionen sowie an die von einer implementierten Logik geforderten Aktionen und den daraus zu erfolgenden Handlungen angepasst. Hierbei sind vorzugsweise zumindest ein Teil der Interaktionsfenster einer jeweiligen Benutzerschnittstelle kontextabhängige Interaktionsfenster. Die Kontextregeln können auf beliebige Art und Weise hinterlegt werden, vorzugsweise werden die Kontextregeln durch die Sprache BPEL (BPEL = Business Process Execution Language) beschrieben.

In einer besonders bevorzugten Ausführungsform erfolgt die Datenübertragung zwischen der Adaptionseinheit und der Verwaltungseinheit über so genannte Webservice-Schnittstellen. Web-Services und entsprechende Schnittstellen sind hinlänglich aus dem Stand der Technik bekannt und werden deshalb nicht im Detail erläutert. Ein Web-Service ist eine Anwendung, die mit einem entsprechenden Identifizierer im Datennetz eindeutig identifizierbar ist und deren Schnittstellen mit Hilfe der Sprache XML definiert werden (XML = Extensible Markup Language). Ein Web-Service unterstützt insbesondere die direkte Interaktion mit anderen Benutzerschnittstellen und Adaptionseinheiten unter Verwendung XML-basierter Nachrichten durch den Austausch über internet-basierte Protokolle. Vorzugsweise wird zur Kommunikation zwischen den Web-Service-Schnittstellen das hinlänglich aus dem Stand der Technik bekannte SOAP-Protokoll eingesetzt (SOAP = Simple Object Access Protocol). Dieses Protokoll ist ein Anwendungsprotokoll, welches auf bekannte Protokolle, wie HTTP, TCP (TCP = Transport Control Protocol) und IP (IP = Internet Protocol) aufsetzt.

In einer weiteren bevorzugten Ausführungsform der Erfindung kommuniziert die Verwaltungseinheit bei der Verarbeitung der Dienste mit einem oder mehreren Rechnern im Datennetz, wodurch auch die Verarbeitung von Diensten an entfernten Rechnern im Datennetz gewährleistet wird.

In einer weiteren Ausführungsform der Erfindung werden der oder die Dienste einem Benutzer in Abhängigkeit von einem dem Benutzer zugeordneten Benutzerprofil bereitgestellt. Vorzugsweise sind hierbei eine Mehrzahl von unterschiedlichen Benutzerprofilen auf der Verwaltungseinheit hinterlegt.

Neben dem oben beschriebenen Verfahren betrifft die Erfindung ferner ein Datennetz zur Verarbeitung von Diensten, wobei mehrere Dienste einem Benutzer auf mehreren, zumindest teilweise unterschiedlichen Benutzerschnittstellen bereitgestellt werden. Das Datennetz umfasst hierbei eine Verwaltungseinheit zur Verwaltung und Verarbeitung des oder der Dienste im Datennetz, wobei durch die Verwaltungseinheit bei einer Zustandsänderung eines auf einer Benutzerschnittstelle bereitgestellten Dienstes die sich daraus ergebende Zustandsänderung des gleichen Dienstes auf einer oder mehreren anderen Benutzerschnittstellen und eines oder mehrerer anderer Dienste auf einer oder mehrerer anderer Benutzerschnittstellen und optional auch auf der gleichen Benutzerschnittstelle ausgelöst wird.

In dem Datennetz ist wenigstens eine Adaptionseinheit vorgesehen, die im Betrieb zwischen den Benutzerschnittstellen und der Verwaltungseinheit zur Verwaltung und Verarbeitung der Dienste übertragene Daten derart adaptiert, dass die Daten zwischen der wenigstens einen Adaptionseinheit und der Verwaltungseinheit in einem von den Benutzerschnittstellen unabhängigen Format übertragen werden. Das Datennetz ist hierbei vorzugsweise derart ausgestaltet, dass alle zuvor beschriebenen Varianten des erfindungsgemäßen Verfahrens in dem Datennetz durchführbar sind.

Darüber hinaus betrifft die Erfindung einen Netzrechner zur Verwendung in einem erfindungsgemäßen Datennetz, wobei der Netzrechner im Betrieb als Verwaltungseinheit in dem Datennetz arbeitet.

Ausführungsbeispiele der Erfindung werden nachfolgend der beigefügten Figuren detailliert beschrieben.

Es zeigen:
- Fig. 1: eine schematische Darstellung, welche die Durchführung einer Ausführungsform des erfindungsgemäßen Verfahrens wiedergibt; und
- Fig. 2: eine schematische Darstellung, welche ein Beispiel von auf verschiedenen Geräten verteilten Benutzeragenten und deren erfindungsgemäße Synchronisation verdeutlicht.

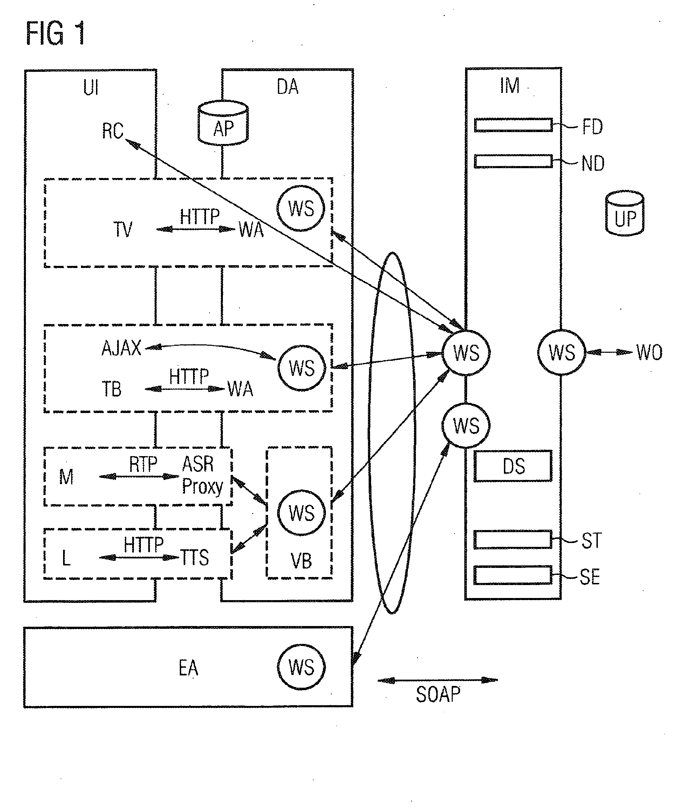

Fig. 1 zeigt schematisch die wesentlichen Komponenten in einem Datennetz, welche eine erfindungsgemäße Verarbeitung von Diensten in dem Datennetz ermöglichen. Die Kommunikation setzt sich im erfindungsgemäßen Verfahren aus drei Schichten zusammen, nämlich aus Benutzerschnittstellen UI in der Form von User-Agenten, aus einer Adaptionseinheit DA in der Form eines Geräteadapters und aus einer Verwaltungseinheit IM in der Form eines so genannten Interaction-Managers.

Wie bereits oben erwähnt, ist ein Benutzeragent bzw. User-Agent eine hinlänglich aus dem Stand der Technik bekannte Einheit in der Form eines Client-Programms, mit dem ein Dienst in dem Netz genutzt werden kann. Der Benutzeragent stellt hierbei eine Schnittstelle zum Benutzer dar, um Inhalte darzustellen und Befehle entgegenzunehmen. Hier und im Folgenden wird unter Benutzeragent gegebenenfalls auch ein separates Gerät mit einer entsprechenden Benutzerschnittstelle zur Interaktion mit einem Benutzer verstanden.

In Fig. 1 sind als Benutzeragenten ein Fernsehgerät TV, ein Text-Browser TB in der Form eines Web-Browsers auf einem PC, ein Sprach-Browser VB und ein so genannter Rich-Client RC vorgesehen. Für all diese Benutzeragenten wird ein einheitliches Portal gebildet, welches von dem Server IM verwaltet wird. Das Portal stellt hierbei unterschiedliche Dienste auf einer einheitlichen Plattform in der Form von entsprechenden Benutzerschnittstellen, beispielsweise in der Form von so genannten Portlets oder Gadgets bereit. Bei Portlets oder Gadgets handelt es sich um Unterfenster, in denen Inhalte aus verschiedenen Quellen zusammengefasst werden. Hierbei sind die Portlets und Gadgets - im Unterschied zu aus dem Stand der Technik bekannten Portalen - jedoch auf mehrere Benutzeragenten verteilt. Das Portal wird in Abhängigkeit von dem Benutzer, der auf das Portal nach einer entsprechenden Authentifizierung zugreift, eingerichtet. Um dies zu ermöglichen, ist zentral in dem Server IM ein Benutzerprofil UP für jeden Benutzer hinterlegt.

Aufgrund der unterschiedlichen Ausgestaltung der einzelnen Benutzeragenten gemäß Fig. 1 unterscheiden sich zumindest teilweise auch die Formate, in denen Informationen in den einzelnen Benutzeragenten verarbeitet werden können. In dem Beispiel der Fig. 1 wechselwirkt der Fernseher TV mit einer entsprechenden Web-Applikation WA über das HTTP-Protokoll. Ebenso tauscht der Text-Browser TB über das HTTP-Protokoll (und ergänzend auch über eine AJAX-Anwendung (Asynchronous JavaScript and XML) ) Informationen mit einer Web-Applikation WA aus.

Im Unterschied zu dem Fernseher TV und dem Text-Browser TB, welche visuell mit dem Benutzer interagieren, verwendet der Sprach-Browser VB einen anderen Interaktionskanal, um Informationen mit einem Benutzer auszutauschen. Mittels des Sprach-Browsers werden nämlich nicht mehr visuell durch Anzeige auf einem Fernseh-Bildschirm bzw. einem Monitor Informationen bereitgestellt, sondern der Sprach-Browser verarbeitet Informationen auditiv. Hierzu wird ein entsprechendes Mikrofon M und ein entsprechender Lautsprecher L verwendet, um die Kommunikation zwischen Benutzer und Sprach-Browser VB zu gewährleisten. Das Mikrofon wechselwirkt hierbei über einen so genannten ASR-Proxy (ASR = Automatic Speech Recognition) mit dem Sprach-Browser VB, wobei Sprachströme mit Hilfe des RTP-Protokolls (RTP = Real-Time. Transport Protocol) übertragen werden. Auf diese Weise werden Sprachbefehle des Benutzers, die dieser in das Mikrofon M eingibt, in entsprechende Befehle umgewandelt, welche vom Sprach-Browser VB verarbeitet werden können. Analog werden von dem Sprach-Browser VB Eingabeaufforderungen in der Form von Sprachnachrichten an den Benutzer ausgegeben. Dies erfolgt über ein so genanntes TTS-System (TTS = Text to Speech), mit dem ein entsprechender Text in Sprache umgewandelt wird, welche an dem Lautsprecher L hörbar für den Benutzer ausgegeben wird.

Wie sich aus dem Vorangegangenen ergibt, stellen die Benutzeragenten in dem Beispiel der Fig. 1 unterschiedliche Arten von Benutzerschnittstellen dar, insbesondere sind verschiedene Interaktions-Modi der Benutzerschnittstellen mit einem Benutzer, beispielsweise über Sprache und über Text, vorgesehen. Dies hat zur Folge, dass auch unterschiedliche Datenformate im Datennetz ausgetauscht werden. Um nunmehr zu erreichen, dass die eingegebenen bzw. ausgegebenen Informationen der einzelnen Benutzeragenten synchronisiert werden, ist gemäß der Erfindung die zentrale Synchronisationseinheit IM vorgesehen. Um diese Einheit verwenden zu können, müssen die dort verarbeiteten Informationen in einem einheitlichen, geräteunabhängigen Format empfangen werden. Die Erzeugung des geräteunabhängigen Formates erfolgt erfindungsgemäß in einer oder mehreren Adaptionseinheiten in der Form von Geräteadaptern DA. Es kann hierbei ein zentraler Geräteadapter bzw. viele verschiedene Geräteadapter für jedes einzelne Gerät vorgesehen sein. Jeder Geräteadapter DA enthält hierbei ein Adaptionsprofil, welches angibt, welches geräteabhängige Format in das entsprechende geräteunabhängige Format umgewandelt werden soll und wie die Umwandlung durchgeführt werden soll. Der Geräteadapter DA muss dabei keine separate Einheit sein, sondern er kann bereits in dem Benutzeragenten integriert sein. Es handelt sich dann um einen Benutzeragenten in der Form eines so genannten Rich-Clients RC. Auch der Sprach-Browser VB in Kombination mit dem Mikrophon M und dem Lautsprecher L kann als Rich Client angesehen werden, in dem Benutzeragent und Geräteadapter in einer Einheit zusammengefasst sind.

Der Geräteadapter DA stellt aus der Perspektive des Interaction-Managers IM zusammen mit dem Benutzeragenten US die Client-Seite dar, wohingegen der Geräteadapter DA aus Sicht des einzelnen Geräts bzw. Benutzeragenten UI die Serverseite ist. Der oder die Geräteadapter übernehmen die Umsetzung von Zustandsänderungen des Benutzeragenten auf so genannte Web-Service-Schnittstellen WS im Geräteadapter. Es wird hierbei eine Umwandlung des im Geräteadapter empfangenen, geräteabhängigen Datenformats in ein von dem jeweiligen Benutzeragenten unabhängigen Format erreicht. In der hier beschriebenen Ausführungsform werden die Daten in dem geräteunabhängigen Format mit Hilfe des hinlänglich aus dem Stand der Technik bekannten SOAP-Protokolls übertragen. Analog zu den Web-Service-Schnittstellen WS im Geräteadapter DA existieren entsprechende Web-Service-Schnittstelle WS im Interaction-Manager IM zum Empfang bzw. zum Aussenden von Daten in einem geräteunabhängigen Format über das SOAP-Protokoll. Neben einer Umwandlung von einem geräteabhängigen Format in ein geräteunabhängiges Format übernimmt der Geräteadapter DA auch die umgekehrte Umwandlung der geräteunabhängigen Daten im SOAP-Protokoll in das entsprechende Format des jeweiligen Benutzeragenten. In Fig. 1 ist ferner beispielhaft noch eine weitere externe Applikation EA wiedergegeben, welche ebenfalls über Web-Service-Schnittstellen mit dem Interaktions-Manager kommuniziert.

Im Interaction-Manager IM erfolgt die Synchronisation der über den Geräteadapter DA empfangenen Daten der entsprechenden Benutzerschnittstellen. Darüber hinaus kann der Interaction-Manager über eine oder mehrere weitere Web-Service-Schnittstellen WS mit Diensten im Internet kommunizieren, insbesondere mit solchen Diensten, welche durch den Benutzeragenten dem Benutzer präsentiert bzw. bereitgestellt werden. Beispielsweise kann der Interaction-Manager mit einem Workflow-Service WO zur Steuerung der dem System zugrunde liegenden Geschäftsprozesse verbunden sein. Der Interaction-Manager IM stellt die zentrale Instanz in dem erfindungsgemäßen Verfahren dar. Er stellt Formular-Definitionen FD (z.B. als so genannte X-Forms), die Navigationsstruktur als Navigationdefinitionen ND und andere Inhalte in einer von dem Benutzeragenten unabhängigen Form als Web-Service zur Verfügung. Die Web-Service-Schnittstellen hin zu allen Geräteadaptern DA sind dabei einheitlich. Der Interaction-Manager benötigt somit kein Wissen über die jeweiligen Geräteeigenschaften.

Im Interaction-Manager gibt es ein zentrales Session-Management SE sowie Zustands-Management ST, mit denen die gerade verbundenen Geräte bzw. Benutzeragenten, die darauf präsentierten Dienste und die Zustände der Dienste verwaltet werden. Damit kann der Interaction-Manager bei Anfragen eines Geräteadapters nicht nur die Anfrage dieses Geräteadapters beantworten, sondern gegebenenfalls alle verbundenen Geräte über deren Geräteadapter DA aktualisieren. Es wird somit eine Geräte-Synchronisation DS geschaffen, welche den Abgleich/ Synchronisation zwischen den Geräten und den präsentierten Diensten ermöglicht. Wird beispielsweise eine Spracheingabe in ein sprechendes Formular auf dem Sprach-Browser VB vorgenommen, wird diese Eingabe durch die Synchronisation über den Interaction-Manager IM auch als Text in einem entsprechenden Textformular in dem Text-Browser TB angezeigt. Mit dem Interaction-Manager IM wird es ferner ermöglicht, dass beim Neuverbinden eines zusätzlichen Geräts dieses Gerät mit dem Zustand der anderen Geräte synchronisiert werden kann. Unabhängig von der konkreten technischen Plattform des Interaction-Managers übernimmt dieser somit die Rolle einer geräteübergreifenden und Benutzeragenten übergreifenden Portal-Instanz.

In der in Fig. 1 gezeigten Ausführungsform der Erfindung werden die dem Benutzer bereitgestellten Inhalte über so genannte kontextabhängige Regeln ausgewählt. Dies bedeutet, dass in Abhängigkeit der vom Benutzer getätigten bzw. von einer Logik geforderten Aktionen (dem so genannten Kontext) entsprechende Aktivitäts-Zusammenhänge modelliert werden, welche zu einer entsprechenden Ausgestaltung bzw. Auswahl der dem Benutzer bereitgestellten Dienste führt. Zur Umsetzung solcher Kontextregeln können beispielsweise Workflow-Definitions-Standards oder auch die hinlänglich aus dem Stand der Technik bekannte Steuerungssprache BPEL (BPEL = Business Process Execution Language) eingesetzt werden.

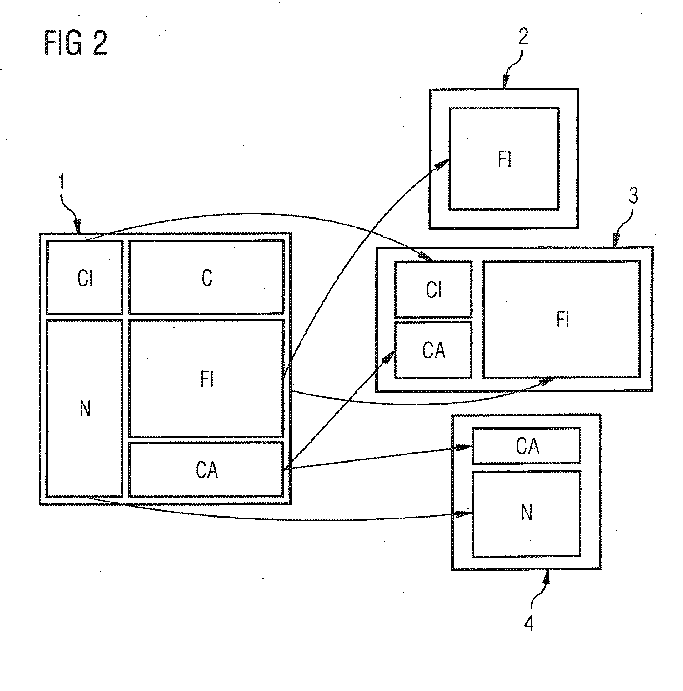

Fig. 2 zeigt eine schematische Darstellung, welche beispielhaft Benutzeragenten auf verschiedenen Geräten zeigt, die mit Hilfe des erfindungsgemäßen Verfahrens synchronisiert werden können. Bezugszeichen 1 bezeichnet hierbei einen Text-Browser auf einem PC. Durch das Bezugszeichen 2 wird das Eingabeformular eines Telefon-/Sprach-Browsers wiedergegeben. Ferner ist der Bildschirm 3 eines Fernsehers sowie die Anzeigefläche 4 eines PDA gezeigt. Der Text-Browser 1 enthält als Unterfenster ein Fenster CI zur Anzeige von Kontext-Informationen, ein Fenster C zur Anzeige von Inhalten, ein Navigationsfenster N, ein Eingabeformular FI und ein Formular CA, welches die Aktionen angibt, welche im entsprechenden Kontext durch einen Benutzer ausgewählt werden können. Der Sprach-Browser 2 enthält nur ein Eingabeformular FI. Der Bildschirm 3 des Fernsehers enthält als Unterfenster das Kontext-Informationsfenster CI, das Eingabeformular FI sowie das Fenster CA zur Auswahl von kontextabhängigen Aktionen. Die Anzeigefläche 4 des PDA enthält das Fenster CA sowie das Navigationsfenster N.

Die einzelnen Geräte interagieren mit Hilfe des erfindungsgemäßen Verfahrens derart, dass ein auf mehrere Geräte verteiltes Portal geschaffen wird. Dies bedeutet, dass entsprechende Unterfenster mit den gleichen Bezugszeichen miteinander synchronisiert werden. Verändert sich beispielsweise der Zustand des Text-Browsers 1, indem ein neuer Kontext ausgewählt wird, führt dies zu einer Veränderung des Kontext-Fensters CI nicht nur im Text-Browser 1, sondern auch auf dem Fernsehbildschirm 3. Ebenso führt eine Spracheingabe in dem Sprach-Browser 2 nicht nur zu einer Anzeige der Spracheingabe in Textform im Eingabeformular FI des Sprach-Browsers, sondern auch in den Eingabeformularen FI des Text-Browsers 1 und des Fernsehbildschirms 3. Eine Veränderung des Zustands des Unterfensters CA führt im Text-Browser 1 ebenfalls zu einer entsprechenden analogen Veränderung der Fenster CA auf dem Bildschirm 3 des Fernsehers und der Anzeigefläche 4 des PDA. Ferner wird die Veränderung des Navigationsfensters N im PDA auch in dem Navigationsfenster N des Web-Browsers übernommen und umgekehrt. Es wird somit ein Portal geschaffen, bei dem der gleiche Dienst auf unterschiedlichen Geräten angezeigt werden kann, wobei nicht alle Dienste auf jedem Gerät wiedergegeben werden müssen.

Das Verfahren der Erfindung gemäß der oben beschriebenen Ausführungsform weist eine Reihe von Vorteilen auf. Insbesondere wird durch das Verfahren ein geräte-übergreifendes Portal geschaffen, bei dem derselbe Dienst von mehreren Geräten alternativ und sogar gleichzeitig genutzt werden kann. Darüber hinaus wird Multimodalität unterstützt, d.h., dass die Benutzeragenten auf den einzelnen Geräten verschiedene Sinneskanäle des Benutzers (Sehen, Hören, Fühlen usw.) ansprechen können. Zustandsänderungen des Systems, z.B. durch Aktionen des Benutzers, wirken sich dabei auf alle verbundenen Geräte wahrnehmbar aus. Beispielsweise verändert die Navigation in einem Anwendungsmenü per Sprache auf einem Endgerät, wie z.B. einem Handy, parallel auch den Zustand des Anwendungsmenüs auf einem PC oder einem Fernseher. Der Benutzer des Portals bekommt somit über mehrere verschiedene Kanäle eine Rückmeldung von einem Dienst. Die einzelnen Fähigkeiten der Geräte ergänzen sich hierbei gegenseitig. Insbesondere hat der Benutzer die Wahl, über welches Gerät er jeweils Eingaben vornimmt und Ergebnisse des Systems wahrnimmt. Beispielsweise kann sich ein Benutzer eine Information anzeigen lassen, er kann sie sich jedoch gegebenenfalls auch über eine entsprechende Benutzerschnittstelle vorlesen lassen.

Das erfindungsgemäße Verfahren hat ferner den Vorteil, dass Geräte des Portals problemlos ausgetauscht und hinzugenommen werden können. Während der Nutzung eines Dienstes kann dabei jederzeit das Gerät gewechselt oder ausgetauscht werden, da immer die Synchronisation über eine entsprechende Verwaltungseinheit gewährleistet ist. Ein neu mit dem Portal verbundenes Gerät übernimmt hierbei den Zustand des Dienstes, der auf einem anderen Gerät bereitgestellt wird, z.B. die Position in einer Navigationsstruktur oder ein zuvor teilweise ausgefülltes Formular. Der Vorteil für den Benutzer ist hierbei, dass er z.B. seine Arbeit an einem PC beginnen kann und bei Bedarf auf einem PDA fortsetzen kann, ohne sich dort erneut durch die Navigationsstruktur bewegen zu müssen oder ein noch nicht vollständig ausgefülltes Formular von vorne ausfüllen zu müssen.

Das erfindungsgemäße Verfahren ermöglicht ferner die Integration von unterschiedlichen Diensten auf unterschiedlichen Geräten miteinander, so dass eine Zustandsänderung an einem Dienst auch eine dazu passende Zustandsänderung an einem anderen Dienst bewirkt. Damit wird die Interaktion zwischen Geräten ermöglicht. Beispielsweise kann das Eingabeformular für eine Reisebuchung auf einem PDA dargestellt werden, wobei jedoch die zur Eingabe passende Landkarte des Reiselands auf einem PC wiedergegeben wird. Es wird somit eine gesteuerte Verbindung verschiedener Geräte für unterschiedliche Teildienste ermöglicht, wobei die Darstellung insbesondere auch an den aktuellen Kontext des Benutzers angepasst werden kann.

Mit dem erfindungsgemäßen Verfahren kann ferner eine homogene Benutzeroberfläche auf einer Mehrzahl von Geräten erzeugt werden, indem die Darstellung der einzelnen Dienste auf den Geräten ähnlich ausgestaltet wird, so dass bei Benutzern ein Wiedererkennungseffekt unabhängig davon erreicht wird, welches Gerät der Benutzer gerade bedient.

In dem erfindungsgemäßen Verfahren muss die Verwaltungseinheit die spezifischen Geräteeigenschaften nicht kennen, so dass die Entwicklung und Wartung der Verarbeitungseinheit vereinfacht wird. Durch eine solche offene Architektur wird die Anwendung und Integration beliebiger Geräte über den Geräteadapter ermöglicht. Die Geräteadapter können hierbei auf beliebigen Plattformen entwickelt werden, wie z.B. Java oder PHP. Spezielle Geräte mit der oben erwähnten Rich-Client-Funktionalität können ohne Geräteadapter direkt mit der Verwaltungseinheit kommunizieren.

Das erfindungsgemäße Verfahren weist ferner den Vorteil auf, dass plattform-neutrale, abstrakte Benutzerschnittstellen-Definitionen (wie z.B. Formulare, Navigation, Messaging und dergleichen) durch die Verwaltungseinheit bereitgestellt werden können. Die Geräte und der Geräteadapter müssen hierbei die Schnittstelle der hinter der Verwaltungseinheit liegenden Dienste nicht kennen. Es wird dadurch eine schnelle Geräteadaption mit geringem Aufwand bei der Entwicklung neuer Clients ermöglicht.

## Patentansprüche

1. Verfahren zur Verarbeitung von Diensten in einem Datennetz, wobei mehrere Dienste einem Benutzer auf mehreren, zumindest teilweise unterschiedlichen Benutzerschnittstellen (UI) bereitgestellt werden, bei dem:
- die Dienste von einer Verwaltungseinheit (IM) im Datennetz verwaltet und verarbeitet werden, wobei durch die Verwaltungseinheit (IM) bei einer Zustandsänderung eines auf einer Benutzerschnittstelle (UI) bereitgestellten Dienstes die sich daraus ergebende Zustandsänderung des gleichen Dienstes auf einer oder mehreren anderen Benutzerschnittstellen (UI) und eines oder mehrerer anderer Dienste auf einer oder mehreren anderen Benutzerschnittstellen (UI) ausgelöst wird;
- zwischen den Benutzerschnittstellen (UI) und der Verwaltungseinheit (IM) zur Verwaltung und Verarbeitung der Dienste Daten übertragen werden, welche in wenigstens einer Adaptionseinheit (DA) derart adaptiert werden, dass die Daten zwischen der wenigstens einen Adaptionseinheit (DA) und der Verwaltungseinheit (IM) in einem von den Benutzerschnittstellen (UI) unabhängigen Format übertragen werden.

2. Verfahren nach Anspruch 1, bei dem durch die Verwaltungseinheit (IM) bei einer Zustandsänderung eines auf einer Benutzerschnittstelle (UI) bereitgestellten Dienstes ferner die sich daraus ergebende Zustandsänderung eines oder mehrerer anderer Dienste auf der gleichen Benutzerschnittstelle (UI) ausgelöst wird.

3. Verfahren nach Anspruch 1 oder 2, bei dem die mehreren Benutzerschnittstellen (UI) zumindest teilweise über unterschiedliche Interaktionskanäle mit dem Benutzer wechselwirken.

4. Verfahren nach einem der vorhergehenden Ansprüche, bei dem der oder die Dienste auf Benutzerschnittstellen (UI) von mehreren Geräten bereitgestellt werden.

5. Verfahren nach Anspruch 4, bei dem die mehreren Geräte einen Netzrechner, und/oder ein Mobiltelefon und/oder einen PDA und/oder einen Fernseher und/oder ein VoIP-Telefon umfassen.

6. Verfahren nach einem der vorhergehenden Ansprüche, bei dem die mehreren Benutzerschnittstellen Benutzeragenten umfassen.

7. Verfahren nach einem der vorhergehenden Ansprüche, bei dem für wenigstens einen Teil der Benutzerschnittstellen (UI) die Adaption der Daten für jede Benutzerschnittstelle (UI) durch eine eigene Adaptionseinheit (DA) erfolgt, welche in dem Gerät integriert ist, auf dem die jeweilige Benutzerschnittstelle (UI) bereitgestellt wird.

8. Verfahren nach einem der vorhergehenden Ansprüche, bei dem für wenigstens einen Teil der Benutzerschnittstellen (UI) die Adaption der Daten durch eine gemeinsame, allen Benutzerschnittstellen (UI) des wenigstens einen Teils zugeordnete Adaptionseinheit (DA) im Datennetz erfolgt.

9. Verfahren nach einem der vorhergehenden Ansprüche, bei dem wenigstens ein Teil der Benutzerschnittstellen (UI) jeweils eine Mehrzahl von Interaktionsfenstern (CI, C, N, FI, CA) umfassen.

10. Verfahren nach einem der vorhergehenden Ansprüche, bei dem zumindest ein Teil der Benutzerschnittstellen (UI) kontextabhängige Benutzerschnittstellen sind, welche nach vorbestimmten Kontextregeln einem Benutzer Informationen bereitstellen und/oder Eingaben ermöglichen.

11. Verfahren nach Anspruch 9 und 10, bei dem zumindest ein Teil der Interaktionsfenster (CI, C, N, FI, CA) kontextabhängige Interaktionsfenster sind.

12. Verfahren nach Anspruch 10 oder 11, bei dem die vorbestimmten Kontextregeln über BPEL beschrieben werden.

13. Verfahren nach einem der vorhergehenden Ansprüche, bei dem die Datenübertragung zwischen der wenigstens einen Adaptionseinheit (DA) und der Verwaltungseinheit (IM) über Web-service-Schnittstellen (WS) erfolgt.

14. Verfahren nach Anspruch 13, bei dem das SOAP-Protokoll zur Datenübertragung zwischen der wenigstens einen Adaptionseinheit (DA) und der Verwaltungseinheit (IM) verwendet wird.

15. Verfahren nach einem der vorhergehenden Ansprüche, bei dem die Verwaltungseinheit (IM) bei der Verarbeitung der Dienste mit einem oder mehreren Rechnern im Datennetz kommuniziert.

16. Verfahren nach einem der vorhergehenden Ansprüche, bei dem der oder die Dienste einem Benutzer in Abhängigkeit von einem dem Benutzer zugeordneten Benutzerprofil (UP) bereitgestellt werden.

17. Verfahren nach einem der vorhergehenden Ansprüche, bei dem eine Mehrzahl von unterschiedlichen Benutzerprofilen (UP) auf der Verwaltungseinheit (IM) hinterlegt sind.

18. Datennetz zur Verarbeitung von Diensten, wobei mehrere Dienste einem Benutzer auf mehreren, zumindest teilweise unterschiedlichen Benutzerschnittstellen bereitgestellt werden, umfassend:
- eine Verwaltungseinheit (IM) zur Verwaltung und Verarbeitung der Dienste im Datennetz, wobei durch die Verwaltungseinheit (IM) bei einer Zustandsänderung eines auf einer Benutzerschnittstelle (UI) bereitgestellten Dienstes die sich daraus ergebende Zustandsänderung des gleichen Dienstes auf einer oder mehreren anderen Benutzerschnittstellen (UI) und eines oder mehrerer anderer Dienste auf einer oder mehreren anderen Benutzerschnittstellen (UI) ausgelöst wird;
- wenigstens eine Adaptionseinheit (DA), die im Betrieb zwischen den Benutzerschnittstellen (UI) und der Verwaltungseinheit (IM) zur Verwaltung und Verarbeitung der Dienste übertragene Daten derart adaptiert, dass die Daten zwischen der wenigstens einen Adaptionseinheit (DA) und der Verwaltungseinheit (IM) in einem von den Benutzerschnittstellen (UI) unabhängigen Format übertragen werden.

19. Datennetz nach Anspruch 18, wobei dass Datennetz derart eingerichtet ist, dass in dem Datennetz ein Verfahren nach einem der Ansprüche 2 bis 17 durchführbar ist.

20. Netzrechner zur Verwendung in einem Datennetz nach Anspruch 18 oder 19, wobei der Netzrechner derart ausgestaltet ist, dass er als Verwaltungseinheit (IM) in dem Datennetz arbeitet.

## Claims

1. Method for processing services in a data network, a user being provided with a plurality of services on a plurality of user interfaces (UI) which are at least partially different, in which:
- the services are managed and processed by a management unit (IM) in the data network, in which case, in the event of a state change in a service provided on one user interface (UI), the management unit (IM) triggers the resulting state change in the same service on one or more other user interfaces (UI) and in one or more other services on said one or more other user interfaces (UI);
- data are transmitted between the user interfaces (UI) and the management unit (IM) for managing and processing the services, which data are adapted in at least one adaptation unit (DA) in such a manner that the data are transmitted between the at least one adaptation unit (DA) and the management unit (IM) in a format independent of the user interfaces (UI).

2. Method according to Claim 1, in which, in the event of a state change in a service provided on one user interface (UI), the management unit (IM) also triggers the resulting state change in one or more other services on the same user interface (UI).

3. Method according to Claim 1 or 2, in which the plurality of user interfaces (UI) interact with the user at least partially using different interaction channels.

4. Method according to one of the preceding claims, in which the service(s) on user interfaces (UI) is/are provided by a plurality of devices.

5. Method according to Claim 4, in which the plurality of devices comprise a network computer and/or a mobile telephone and/or a PDA and/or a TV and/or a VoIP telephone.

6. Method according to one of the preceding claims, in which the plurality of user interfaces comprise user agents.

7. Method according to one of the preceding claims, in which, for at least some of the user interfaces (UI), the data are adapted for each user interface (UI) by means of a separate adaptation unit (DA) which is integrated in the device on which the respective user interface (UI) is provided.

8. Method according to one of the preceding claims, in which, for at least some of the user interfaces (UI), the data are adapted by means of a common adaptation unit (DA) which is assigned to all user interfaces (UI) of said at least some of the user interfaces.

9. Method according to one of the preceding claims, in which at least some of the user interfaces (UI) respectively comprise a plurality of interaction windows (CI, C, N, FI, CA).

10. Method according to one of the preceding claims, in which at least some of the user interfaces (UI) are context-dependent user interfaces which provide a user with information and/or enable a user to make inputs according to predetermined context rules.

11. Method according to Claims 9 and 10, in which at least some of the interaction windows (CI, C, N, FI, CA) are context-dependent interaction windows.

12. Method according to Claim 10 or 11, in which the predetermined context rules are described using BPEL.

13. Method according to one of the preceding claims, in which the data are transmitted between the at least one adaptation unit (DA) and the management unit (IM) using web service interfaces (WS).

14. Method according to Claim 13, in which the SOAP protocol is used to transmit data between the at least one adaptation unit (DA) and the management unit (IM).

15. Method according to one of the preceding claims, in which the management unit (IM) communicates with one or more computers in the data network when processing the services.

16. Method according to one of the preceding claims, in which a user is provided with the service(s) on the basis of a user profile (UP) assigned to the user.

17. Method according to one of the preceding claims, in which a plurality of different user profiles (UP) are stored on the management unit (IM).

18. Data network for processing services, a user being provided with a plurality of services on a plurality of user interfaces which are at least partially different, comprising:
- a management unit (IM) for managing and processing the services in the data network, in which case, in the event of a state change in a service provided on one user interface (UI), the management unit (IM) triggers the resulting state change in the same service on one or more other user interfaces (UI) and in one or more other services on said one or more other user interfaces (UI);
- at least one adaptation unit (DA) which, during operation, adapts data transmitted between the user interfaces (UI) and the management unit (IM) for managing and processing the services in such a manner that the data are transmitted between the at least one adaptation unit (DA) and the management unit (IM) in a format independent of the user interfaces (UI).

19. Data network according to Claim 18, the data network being set up in such a manner that a method according to one of Claims 2 to 17 can be carried out in the data network.

20. Network computer for use in a data network according to Claim 18 or 19, the network computer being configured in such a manner that it operates as a management unit (IM) in the data network.

## Revendications

1. Procédé pour le traitement de services dans un réseau de données, plusieurs services étant mis à la disposition d'un utilisateur sur plusieurs interfaces d'utilisateurs (UI) au moins en partie différentes, selon lequel :
- les services sont gérés et traités par une unité de gestion (IM) dans le réseau de données, l'unité de gestion (IM) déclenchant, en cas de modification d'état d'un service mis à disposition sur une interface d'utilisateurs (UI), la modification d'état en résultant du même service sur une ou plusieurs autres interfaces d'utilisateurs (UI) et d'un ou de plusieurs autres services sur une ou plusieurs autres interfaces d'utilisateurs (UI) ;
- sont transmises, entre les interfaces d'utilisateurs (UI) et l'unité de gestion (IM) pour la gestion et le traitement des services, des données qui sont adaptées de manière telle, dans au moins une unité d'adaptation (DA), que les données sont transmises entre l'au moins une unité d'adaptation (DA) et l'unité de gestion (IM) dans un format indépendant des interfaces d'utilisateurs (UI).

2. Procédé selon la revendication 1, selon lequel l'unité de gestion (IM) déclenche en outre, en cas de modification d'état d'un service mis à disposition sur une interface d'utilisateurs (UI), la modification d'état en résultant d'un ou de plusieurs autres services sur la même interface d'utilisateurs (UI).

3. Procédé selon la revendication 1 ou 2, selon lequel les plusieurs interfaces d'utilisateurs (UI) interagissent avec l'utilisateur au moins en partie par l'intermédiaire de différents canaux d'interaction.

4. Procédé selon l'une des revendications précédentes, selon lequel le ou les services sont mis à disposition sur des interfaces d'utilisateurs (UI) par plusieurs appareils.

5. Procédé selon la revendication 4, selon lequel les plusieurs appareils incluent un ordinateur de réseau et/ou un téléphone mobile et/ou un PDA et/ou un téléviseur et/ou un téléphone VoIP.

6. Procédé selon l'une des revendications précédentes, selon lequel les plusieurs interfaces d'utilisateurs comprennent des agents d'utilisateurs.

7. Procédé selon l'une des revendications précédentes, selon lequel l'adaptation des données pour chaque interface d'utilisateurs (UI) s'effectue, pour au moins une partie des interfaces d'utilisateurs (UI), par l'intermédiaire d'une propre unité d'adaptation (DA) qui est intégrée à l'appareil sur lequel l'interface d'utilisateurs respective (UI) est mise à disposition.

8. Procédé selon l'une des revendications précédentes, selon lequel l'adaptation des données s'effectue, pour au moins une partie des interfaces d'utilisateurs (UI), dans le réseau de données par l'intermédiaire d'une unité d'adaptation commune (DA) associée à toutes les interfaces d'utilisateurs (UI) de l'au moins une partie.

9. Procédé selon l'une des revendications précédentes, selon lequel au moins une partie des interfaces d'utilisateurs (UI) comprennent respectivement une pluralité de fenêtres d'interaction (CI, C, N, FI, CA).

10. Procédé selon l'une des revendications précédentes, selon lequel au moins une partie des interfaces d'utilisateurs (UI) sont des interfaces d'utilisateurs dépendantes d'un contexte et qui, selon des règles de contexte prédéfinies, mettent des informations à la disposition d'un utilisateur et/ou permettent des saisies.

11. Procédé selon les revendications 9 et 10, selon lequel au moins une partie des fenêtres d'interaction (CI, C, N, FI, CA) sont des fenêtres d'interaction dépendantes d'un contexte.

12. Procédé selon la revendication 10 ou 11, selon lequel les règles de contexte prédéfinies sont décrites via BPEL.

13. Procédé selon l'une des revendications précédentes, selon lequel la transmission de données entre l'au moins une unité d'adaptation (DA) et l'unité de gestion (IM) s'effectue via des interfaces de service Web (WS).

14. Procédé selon la revendication 13, selon lequel le protocole SOAP est utilisé pour la transmission de données entre l'au moins une unité d'adaptation (DA) et l'unité de gestion (IM) .

15. Procédé selon l'une des revendications précédentes, selon lequel l'unité de gestion (IM), lors du traitement des services, communique avec un ou plusieurs ordinateurs dans le réseau de données.

16. Procédé selon l'une des revendications précédentes, selon lequel le ou les services sont mis à la disposition d'un utilisateur en fonction d'un profil d'utilisateur (UP) associé à l'utilisateur.

17. Procédé selon l'une des revendications précédentes, selon lequel une pluralité de profils d'utilisateurs différents (UP) sont déposés sur l'unité de gestion (IM).

18. Réseau de données pour traiter des services, plusieurs services étant mis à la disposition d'un utilisateur sur plusieurs interfaces d'utilisateurs au moins en partie différentes, comprenant :
- une unité de gestion (IM) pour gérer et traiter les services dans le réseau de données, l'unité de gestion (IM) déclenchant, en cas de modification d'état d'un service mis à disposition sur une interface d'utilisateurs (UI), la modification d'état en résultant du même service sur une ou plusieurs autres interfaces d'utilisateurs (UI) et d'un ou de plusieurs autres services sur une ou plusieurs autres interfaces d'utilisateurs (UI) ;
- au moins une unité d'adaptation (DA) qui, en service, adapte des données transmises entre les interfaces d'utilisateurs (UI) et l'unité de gestion (IM) pour la gestion et le traitement des services de manière telle que les données sont transmises entre l'au moins une unité d'adaptation (DA) et l'unité de gestion (IM) dans un format indépendant des interfaces d'utilisateurs (UI).

19. Réseau de données selon la revendication 18, le réseau de données étant configuré de manière telle qu'un procédé selon l'une des revendications 2 à 17 peut être exécuté dans le réseau de données.

20. Ordinateur de réseau destiné à être utilisé dans un réseau de données selon la revendication 18 ou 19, l'ordinateur de réseau étant réalisé de manière à fonctionner en tant qu'unité de gestion (IM) dans le réseau de données.
